# EUROPÄISCHE PATENTSCHRIFT

(11) **EP 1 213 958 B1**
(45) Veröffentlichungstag und Bekanntmachung des Hinweises auf die Patenterteilung: **19.11.2003**
(21) Anmeldenummer: 00964118.4
(22) Anmeldetag: 06.09.2000
(51) Int. Cl.: A01M 1/02

(54) **FLUGINSEKTEN-FANGGERÄT**
FLYING-INSECT TRAP
PIEGE A INSECTES VOLANTS

(30) Priorität: 24.09.1999 DE 19945796
(43) Veröffentlichungstag der Anmeldung: 19.06.2002
(73) Patentinhaber: Engelbrecht, Horst, Christchurch (NZ)
(72) Erfinder: Engelbrecht, Horst, Christchurch (NZ)
(74) Vertreter: Schickedanz, Willi, Dr. Dipl.-Ing.
(86) Internationale Anmeldenummer: EP0008677
(87) Internationale Veröffentlichungsnummer: WO01022813

(56) Entgegenhaltungen:
- EP-A- 0 934 698
- WO-A-98/53677
- DE-A- 3 840 440
- US-A- 5 126 369

## Beschreibung

Die Erfindung betrifft ein Fluginsekten-Fanggerät nach dem Oberbegriff des Patentanspruchs 1.

Nichtstechende Stubenfliegen (musca domestica) und Schmeißfliegen sind als Krankheitsüberträger bekannt, weshalb man sie möglichst aus Wohn- und Arbeitsräumen fernhalten möchte. Insbesondere Geschäftsbereiche, die mit Lebensmitteln in Zusammenhang stehen, beispielsweise Metzgereien, Restaurants, Bäckereien und dergleichen werden häufig von solchen Fliegen besucht, die u. a. Eier in den Lebensmitteln ablegen, wo sich anschließend Maden entwickeln. Sehr zahlreich kommen Stubenfliegen auch dort vor, wo Nutz-Haustiere in großer Zahl gehalten werden, z. B. in Kuh- und Schweineställen. Sie beeinflussen dort das Wohlbefinden der Tiere negativ.

Da es seit einiger Zeit bekannt ist, dass Fliegen von ultraviolettem Licht angezogen werden, wurden Fliegenfänger konstruiert, welche die Fliegen mittels ultraviolettem Licht anlocken und dann mittels einer Klebefolie festhalten (DE-PS 38 40 440; WO 98/53677).

Eine andere Methode der Fliegenbekämpfung besteht darin, die Fliegen mittels chemischer Stoffe anzulocken und dann zu fangen (US-A-5 635 174, US-A-5 770 189, US-A-5 683 687, EP 0 768 823 B1).

Für das Anlocken von Stechmücken, die wegen der Übertragung von oft tödlich verlaufenden Krankheiten wie Malaria, Gelbfieber etc. besonders gefährlich sind, hat sich UV-Licht zwar nicht als unwirksam, aber doch als nicht sehr fängig erwiesen (N. O. Morgan und E. C. Uebel: Efficacy of the Assateague Insect Trap in collecting mosquitos and biting flies in Maryland salt marsh, Mosquito News 34, 1974, S. 196 - 199). Man hat deshalb in der Vergangenheit versucht, Stechmücken eher zu vertreiben statt sie anzuziehen und zu fangen. Hierzu wurden Repellentien zum Einreiben entwickelt, welche die Stechmücken jedenfalls für eine bestimmte Zeit vom Menschen fernhalten (EP 0 641 160 B1). Neuerdings wurden sogar Stoffe entwickelt, welche sowohl Fliegen als auch Stechmücken abstoßen sollen (US-A-5 118 711, US-A-5 228 233; US-A-5 439 941, US-A-5 126 369; US-A-5 635 174, US-A-5 635 173, EP 0 629 344 B1).

Auch mit Hilfe von Ultraschallgeräten wurde versucht, Stechmücken zu vertreiben. Die Wirkungsweise von Ultraschallgeräten beruht darauf, dass Stechmückenmännchen, die Pflanzensaftsauger sind, abends oft Schwärme bilden, die einen speziellen Flügelschwirrton entwickeln, der auch Frequenzen im Ultraschallbereich aufweist. Die Stechmückenweibchen, die ebenfalls, solange sie noch nicht begattet sind, Pflanzensaftsauger sind, fliegen zur Begattung in den Schwarm hinein, lassen sich jedoch nur einmal begatten. Für das begattete Weibchen wirkt ein Schwarm von Stechmückenmännchen nun repellierend. Daher werden befruchtete Stechmückenweibchen - und nur diese stechen den Menschen - bei der Wirtssuche abgeschreckt, sofern der Ultraschall, den ein entsprechendes Gerät abgibt, die artspezifischen Frequenzen enthält (F. W. Kutz: Evaluations of Electronic Mosquito Repelling Device, Mosquito News 34, 1974, S. 369 - 375). In der Praxis haben sich indessen mit Ultraschall arbeitende Repellen nicht bewährt.

Als wirksamer Stoff zum Anlocken von Stechmücken ist CO₂ bekannt. Das Vorhandensein von CO₂ zeigt konzentrationsabhängig die Anwesenheit von Warmblütern an. Die Stechmücken fliegen gegen das CO₂-Konzentrationsgefälle und finden auf diese Weise einen Wirt (C. E. Schreck, H. K. Gouck, K. H. Posey: An experimental Plexiglas (R) mosquito trap utilizing carbon dioxide, Mosquito News 30, 1970, S. 641 - 645). Als CO₂-Quelle für Stechmückenfallen kann sogenanntes Trockeneis verwendet werden, bei dem es sich um verfestigtes Kohlendioxid handelt, das in Form von weißen Blöcken oder Pellets in den Handel gelangt. Trockeneis geht bei Temperaturen oberhalb von -79 °C durch Sublimation, d. h. ohne zu schmelzen oder flüssige Rückstände zu hinterlassen, direkt in gasförmigen CO₂ über. Allerdings ist bei der Verwendung von Trockeneis Vorsicht geboten, weil CO₂-Gase toxisch wirken können. Immerhin entwickelt 1 kg Trockeneis etwa 500 Liter gasförmiges CO₂.

Es wurde auch schon vorgeschlagen, eine CO₂-Quelle mit einer Standard-Lichtquelle zu kombinieren, um Stechmücken (Anopheles quadrimaculatus, Anopheles walkeri, Aedes vexans, Culex salinarius, Psorophora ciliata etc.) anzulocken (R. R. Carestia und Linnaeus B. Savage, Effectiveness of carbon dioxide as a mosquito attractant in the CDC miniature light trap, Mosquito News, Vol. 27, 1967, S. 90 - 92).

Als weiterer Attraktionsstoff für Stechmücken ist Milchsäure bekannt (F. Acree, JR; R. B. Turner, H. K. Gouck, M. Beroza: L-Lactid Acid: A mosquito attractant isolated from humans, Science, Vol. 161, 1968, S. 1346 - 1347). Bei der Milchsäure werden drei Typen unterschieden: die D-(-)Milchsäure, eine linksdrehende Milchsäure, die z. B. bei der Fermentation von Glukose durch lactobacillus leichmannii entsteht, die L-(+)Milchsäure, bei der es sich um eine rechtsdrehende Milchsäure handelt, die im Blut, in Muskelsäuren, der Galle etc. vorkommt und deshalb auch Fleisch-Milchsäure genannt wird. Die (±)-Milchsäure ist Schließlich in Sauermilchprodukten enthalten oder in Melasse infolge der teilweisen Vergärung des Zuckergehaltes von Äpfeln und anderen Früchten. Vitamin B oder Cholesterin wurden ebenfalls als Stoffe ermittelt, die Stechmücken anlocken (SPIEGEL ONLINE 34/1999).

Als Stoff zum Anlocken von Hausfliegen, Wespen und Stechmücken wurden auch substituierte Benzol-Derivate vorgeschlagen, z. B. Phenyläthanol, Aminoäthylbenzol, Benzylalkohol etc., wobei diese Stoffe u. a. von den Sekreten fleischfressender Pflanzen gewonnen werden (WO 97/03561).

Bei einem bekannten Insekten-Fanggerät sind eine Lichtquelle und ein Behälter für die Aufnahme einer chemischen Substanz vorgesehen (GB 2 143 112 A). Dieses Fanggerät weist im Einzelnen einen oberen Hauptkörper auf, der aufhängbar ist und mit einer Anlock-Lampe versehen werden kann. Ein unterer Hauptkörper, der lösbar mit dem oberen Hauptkörper verbunden ist, weist einen anlockenden Teil in der Form eines invertierten Trichters auf. Dieser anlockende Teil ist an seinem oberen Ende offen. Um Fliegen tagsüber zu fangen, ist ein mit einem Köder versehener Tisch in den anlockenden Teil eingehängt oder auf dem Boden direkt unter diesem Teil platziert. Sollen nachts Falter angelockt und gefangen werden, wird die Außenseite des oberen Hauptkörpers mit einer Lichtabdeckfolie überdeckt. Bei diesem bekannten Insekten-Fanggerät ist jedoch weder eine mit einer beliebigen Substanz versehene Fläche noch eine UV-Lichtquelle vorgesehen. Außerdem enthält dieses Fanggerät keine chemische Substanz, die Stechmücken anlockt.

Der Erfindung liegt die Aufgabe zugrunde, eine einfach aufgebaute Vorrichtung zu schaffen, mit der es möglich ist, sowohl Stubenfliegen als auch Stechmücken anzulokken und zu fangen.

Diese Aufgabe wird gemäß den Merkmalen des Patentanspruchs 1 gelöst.

Die Erfindung betrifft somit ein Fluginsekten-Fanggerät, das sowohl zum Fangen von Stubenfliegen und dergleichen als auch zum Fangen von Stechmücken (Schnaken) geeignet ist. Hierbei wird eine an sich bekannte, mit UV-Licht und Klebefolie arbeitende Fangvorrichtung für Fliegen so ergänzt, dass ein Behälter für die Aufnahme von Stoffen, die Stechmücken anlocken, eingebaut wird. Die vorhandene Klebefolie wird somit doppelt ausgenutzt, weil sie sowohl Fliegen als auch Stechmücken festhält.

Der mit der Erfindung erzielte Vorteil besteht insbesondere darin, dass das aus der DE 38 40 440 C2 bekannte Fliegenfanggerät nach einem Umbau auch zum Fangen von Stechmücken verwendet werden kann.

Ausführungsbeispiele der Erfindung sind in den Zeichnungen dargestellt und werden im Folgenden näher beschrieben. Es zeigen:
- Fig. 1: eine erste Ausführungsform einer Insekten-Fangvorrichtung;
- Fig. 2: eine zweite Ausführungsform einer Insekten-Fangvorrichtung;
- Fig. 3: eine erste UV-Lichtquelle;
- Fig. 4: eine zweite UV-Lichtquelle;
- Fig. 5: eine Variante der in der Fig. 2 gezeigten Vorrichtung;
- Fig. 6: eine Ansicht von oben auf die Insekten-Fangvorrichtung;
- Fig. 7: eine Frontansicht der Fangvorrichtung gemäß Fig. 5;
- Fig. 8: einen Längsschnitt A-A durch die Fangvorrichtung gemäß Fig. 7;
- Fig. 9: einen vergrößerten Ausschnitt aus Fig. 8.

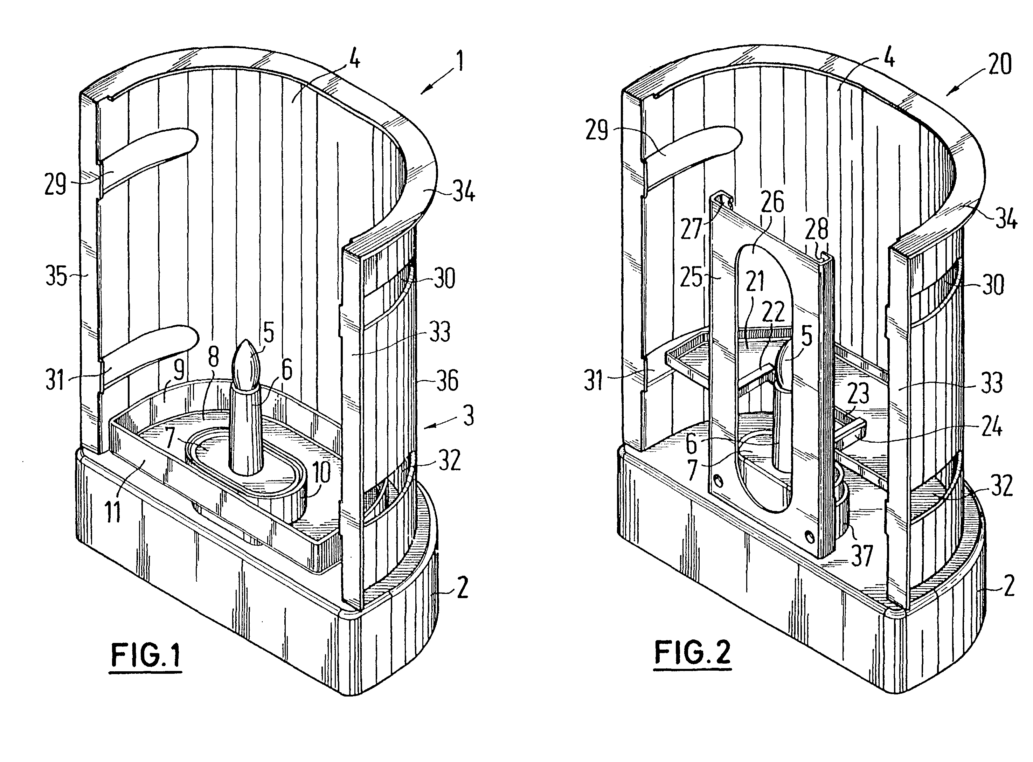

In der Fig. 1 ist eine Insekten-Fangvorrichtung 1 dargestellt, die einen Sockel 2 aufweist, auf dem ein Gestell 3 für die Aufnahme von Klebefolien 4 angeordnet ist. Das Gestell 3 besteht aus einem Rahmen 33, 34, 35 und einer diesen Rahmen ausfüllenden Rückwand 36, wobei in dieser Rückwand vier Aussparungen 29 bis 32 vorgesehen sind. Auf der Innenseite dieser Rückwand kann eine Klebefolie 4 angebracht werden. Diese Klebefolie 4 besitzt keine Aussparungen.

In der Mitte des Sockels 2 befindet sich eine UV-Lampe 5, die in einen zylindrischen Ständer 6 eingeschraubt ist, der seinerseits mit einem Lampensockel 7 in Verbindung steht. Dieser Lampensockel 7 ist seinerseits mit dem Sockel 2 der Fangvorrichtung 1 verbunden und von einem Behälter umgeben, der als Fangschale 8 ausgebildet ist. Diese Fangschale 8 hat eine äußere wandförmige Umrandung 9 sowie eine innere wandförmige Umrandung 10. Die innere Umrandung 10 ist oval ausgebildet und umfasst den ebenfalls oval ausgebildeten Lampensockel 7. Die äußere wandförmige Umrandung 9 weist einen vorderen geraden Abschnitt 11 sowie hintere Abschnitte auf, die zusammen ein Halboval bilden. Die Klebefolie 4 wird bei noch nicht eingesetzter Fangschale 8 einfach gegen die Innenseite der Rückwand gedrückt, bis sie durch den Rahmen 33, 34, 35 gehalten wird. Befinden sich auf der Klebefolie 4 genügend Fliegen, wird sie gegen eine neue ausgetauscht. Um die alte Folie 4 leicht entfernen zu können, wird die Klebefolie 4 mit einem Finger durch eine der Aussparungen 29 bis 32 nach innen gedrückt.

Die UV-Lampe 5 strahlt ihr Licht nach allen Seiten aus, sodass auch die Klebefolie 4 von diesem UV-Licht getroffen wird, das sie reflektiert. Da hierdurch eine große UV-Strahlungsquelle entsteht, werden Fliegen von ihr angezogen.

Die Anziehung von Stechmücken erfolgt dagegen mit einer Substanz, die in der Fangschale 8 angebracht wird. Bei dieser Substanz kann es sich um einen Festkörper, z. B. Trockeneis, um eine Flüssigkeit oder um einen mit einer Flüssigkeit getränkten Lappen oder Schwamm handeln. Auch Pasten, Granulate und dergleichen können in die Schale 8 eingebracht werden.

Die Fliegen werden in bekannter Weise durch die UV-Lichtquelle 5 und die UV-Licht abstrahlende Folie 4 angelockt und fliegen auf die Folie 4 zu, wo sie durch einen Klebstoff festgehalten werden. In analoger Weise werden die Stechmücken durch den Stoff in der Schale 8 angelockt. Sie fliegen nicht immer direkt auf den Lockstoff in der Schale 8 zu, sondern schießen oft über das Ziel hinaus, mit dem Ergebnis, dass sie die Klebefolie 4 berühren und von dieser festgehalten werden. Von der Klebefolie werden somit sowohl Fliegen als auch Stechmücken bzw. Schnaken festgehalten.

In der Fig. 2 ist eine zweite Ausführungsform einer Insekten-Fangvorrichtung 20 dargestellt, die weitgehend mit der Insekten-Fangvorrichtung 1 der Fig. 1 übereinstimmt. Einander entsprechende Teile sind deshalb in der Fig. 2 mit denselben Bezugszahlen versehen wie in Fig. 1.

Im Gegensatz zu der Fliegen-Fangvorrichtung gemäß Fig. 1 weist die Fliegen-Fangvorrichtung nach Fig. 2 eine vertikal bewegliche Schale 21 auf, die auf der Vorderseite eine Aussparung aufweist, die von Wänden 22, 23, 24 begrenzt ist und Platz für die UV-Lampe 5 und deren Halterung 6 lässt.

Vor der Lampe 5 ist eine Führungsschiene 25 mit einer Durchbrechung 26 vorgesehen. Diese Führungsschiene 25 weist an ihren seitlichen Enden U-förmige Führungskanäle 27, 28 auf, in denen die Schale 21 an verschiedenen Stellen befestigt werden kann. Über eine Schelle 37 ist die Führungsschiene 25 mit dem Lampensockel 7 verbunden. Auf diese Weise ist es möglich, die Schale 21 mit dem die Stechmücken anlockenden Stoff in verschiedenen Höhen, bezogen auf die Lampe 5, anzuordnen. Es ist grundsätzlich möglich, die Schale 21 in verschiedenen diskreten Höhen anzuordnen oder sie kontinuierlich zu bewegen und beispielsweise mittels Reibschlusses zu arretieren. Die Schale 21 kann auch geschlossen sein, d. h. man kann auf die durch die Wände 22 bis 24 begrenzte Aussparung verzichten und die geschlossene Schale oberhalb der UV-Lichtquelle 5 anordnen. Hierdurch bewirkt die von der Lampe 5 ausgehende Wärmestrahlung, dass die in der Schale befindlichen Substanzen schneller verdampfen.

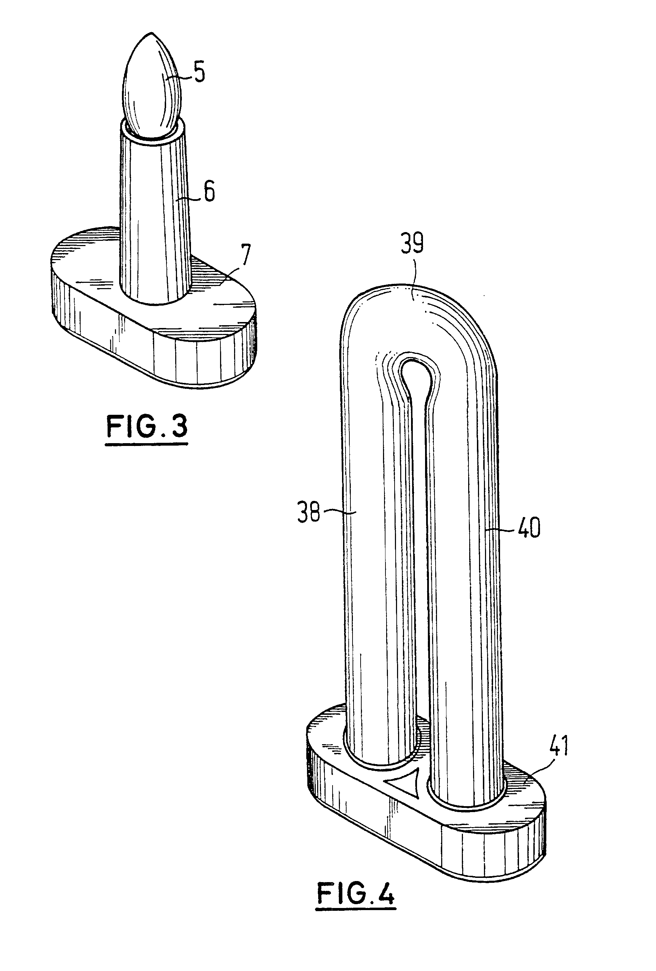

In der Fig. 3 ist die UV-Lampe 5 mit dem zylindrischen Ständer 6 und dem Lampensockel 7 noch einmal in Alleinstellung dargestellt.

Die Fig. 4 zeigt eine andere UV-Lampe, die aus einer Röhre besteht, die zwei parallelen Röhrenabschnitten 38, 40 aufweist, die über ein Verbindungsteil 39 miteinander verbunden sind. Jeder Röhrenabschnitt 38, 40 ist mit seinem offenen Ende mit einem Röhrensockel 41 verbunden.

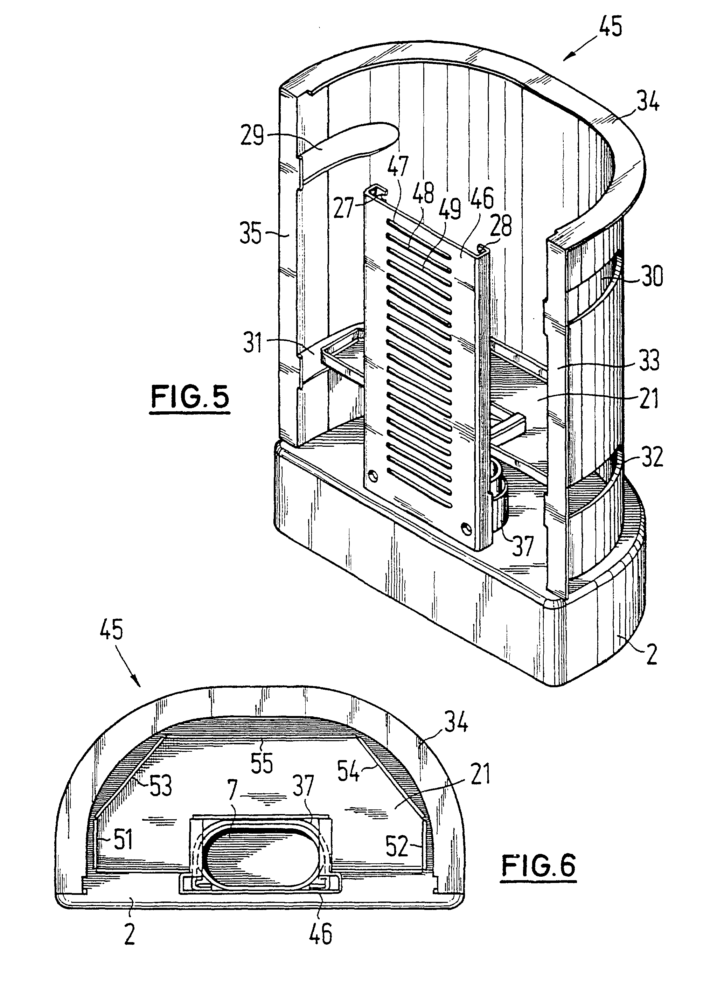

Die Fluginsekten-Fangvorrichtung 45 der Fig. 5 entspricht weitgehend der Fliegen-Fangvorrichtung 20 der Fig. 2. Die einander entsprechenden Bauteile sind deshalb mit denselben Bezugszahlen versehen. Im Unterschied zu der Fangvorrichtung 20 der Fig. 2 weist die Fangvorrichtung 46 der Fig. 5 jedoch eine Führungsschiene 46 auf, die mit mehreren horizontal verlaufenden Schlitzen, z. B. den Schlitzen 47, 48, 49 versehen ist. Durch diese Schlitze 47 bis 49 kann das UV-Licht der Lampe 5 nach vorne austreten.

Die Fig. 6 zeigt eine Ansicht von oben auf die Fluginsekten-Fangvorrichtung 45 gemäß Fig. 5. Man erkennt hierbei den oberen Rahmen 34, den Lampensockel 7, die Schelle 37, den Sockel 2, die Führungsschiene 46 und die bewegliche Schale 21.

Die Begrenzung der Schale 21 erfolgt durch eine vordere Wand 50, zwei kurze seitliche, senkrecht auf der vorderen Wand stehende Wände 51, 52, an die in einem Winkel von ca. 45 zwei weitere Wände 53, 54 anschließen. Diese weiteren Wände 53, 54 sind ihrerseits mit einer Wand 55 verbunden, die parallel zur vorderen Wand 50 verläuft.

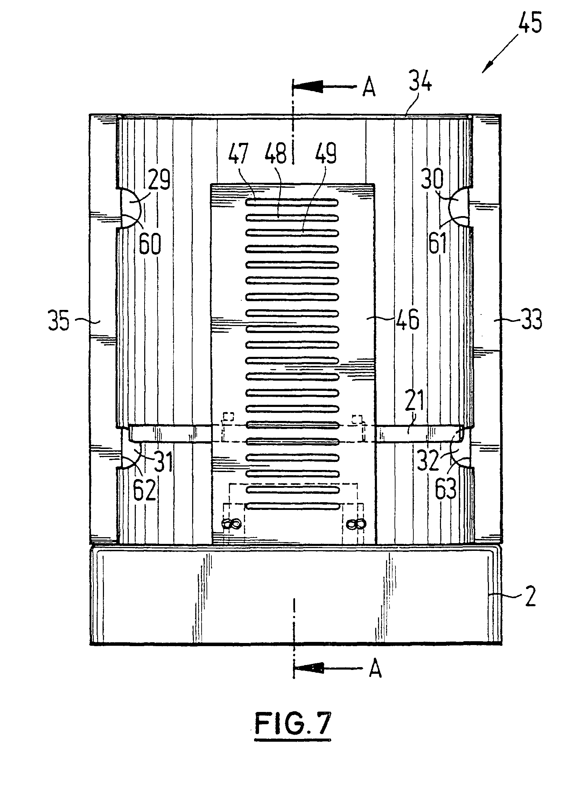

In der Fig. 7 ist die Fluginsekten-Fangvorrichtung 45 in einer Ansicht von vorn dargestellt. Man erkennt hierbei, dass die seitlichen Rahmen 33, 35 in der Höhe der Durchbrechungen 29 bis 32 Vorsprünge 60 bis 63 aufweisen. Diese Vorsprünge 60 bis 63 dienen als Anschläge für eine Klebefolie, die nach der Montage lose von dem oberen Rahmen 34 und den Vorsprüngen 60 bis 63 gehalten wird.

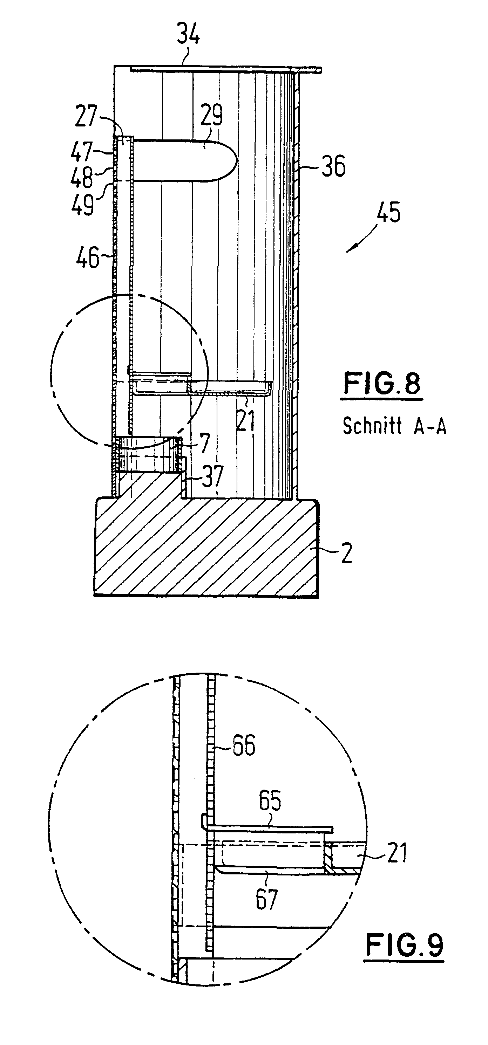

Ein Schnitt A-A durch die Fangvorrichtung 45 nach Fig. 7 ist in der Fig. 8 dargestellt. Die Führungsschiene 46 mit den horizontal verlaufenden Schlitzen 47 bis 49 trägt hierbei mit ihrem U-förmigen Führungskanal 27 die Schale 21.

Wie die Fig. 9 zeigt, greift ein Teil 65 der Schale 21 in Schlitze oder Einkerbungen in der Kante 66 ein, während sich ein anderer Teil 67 auf dieser Kante 66 abstützt. Die Kante 66 weist in vertikaler Richtung vorzugsweise abwechselnd rechteckige Zähne und Zwischenräume zwischen diesen Zähnen auf. In einen dieser Zwischenräume wird der Teil 65 eingehängt. Hierdurch kann die Schale 21 in ihrer Höhe variiert werden.

Es sind indessen auch Schalen-Halterungen möglich, die durch Klemm- oder Reibwirkung mit der Schiene 46 verbindbar sind.

Die Schalen 8, 21 nehmen bei der vorstehend beschriebenen Ausführungsform im Wesentlichen den ganzen Raum ein, der durch das Gestell 3 gebildet wird. Es wäre jedoch auch eine Rinne als Aufnahmebehälter für chemische Stoffe denkbar, die nur einen schmalen Bereich vor der Folie 4 einnehmen würde. Diese Rinne könnte etwa durch rechtwinklig gebogene Stäbe gehalten werden, die an der vorderen Kante des Sockels 2 in diesen eingesteckt werden können.

Es versteht sich, dass das erfindungsgemäße Prinzip auch bei Geräten angewandt werden kann, die eine andere Form besitzen, z. B. beim FANKREFLEKTOR iGu FR 4004 der Ogon-Vertriebsgesellschaft mbH, 47799 Krefeld.

## Patentansprüche

1. Fluginsekten-Fanggerät, mit einer UV-Lichtquelle zum Anlocken von Fliegen und einer mit einer klebrigen Substanz versehenen Fläche zum Fangen der durch die UV-Lichtquelle angelockten Fliegen, **gekennzeichnet durch** einen Behälter (8, 21) für die Aufnahme einer Substanz, die Stechmücken anlockt, wobei die mit der klebrigen Substanz versehene Fläche (4) auch zum Fangen der **durch** diese Substanz angelockten Stechmücken dient.

2. Fluginsekten-Fanggerät nach Anspruch 1, **dadurch gekennzeichnet, dass** der Behälter (8, 21 ) zwischen der UV-Lichtquelle und der mit einer klebrigen Substanz versehenen Fläche (4) angeordnet ist.

3. Fluginsekten-Fanggerät nach Anspruch 2, **dadurch gekennzeichnet, dass** der Behälter (8, 21) relativ zur UV-Lichtquelle (5; 38 bis 40) und zur Fläche (4) verschiebbar ist.

4. Fluginsekten-Fanggerät nach Anspruch 1, **dadurch gekennzeichnet, dass** die UV-Lichtquelle (5; 38 bis 40) mit einem Sockel (2) verbunden ist, auf dem sich ein U-förmiges Gestell (3) für die Halterung einer Folie (4) befindet, die mit einer klebrigen Substanz versehen ist.

5. Fluginsekten-Fanggerät nach Anspruch 1, **dadurch gekennzeichnet, dass** der Behälter (8) einen Boden mit wenigstens einer diesen Boden umgebenden Begrenzungswand (11, 9, 10) aufweist.

6. Fluginsekten-Fanggerät nach Anspruch 5, **dadurch gekennzeichnet, dass** der Behälter (8) in seinem Boden eine Durchbrechung aufweist, durch die ein Sockel (7) für die UV-Lichtquelle (5) steckbar ist.

7. Fluginsekten-Fanggerät nach Anspruch 5, **dadurch gekennzeichnet, dass** die Durchbrechung mit einer inneren Begrenzungswand (10) versehen ist und der Rand des Behälters (8) eine äußere Begrenzungswand (9) aufweist.

8. Fluginsekten-Fanggerät nach Anspruch 1, **dadurch gekennzeichnet, dass** eine Führungsschiene (25) für die bewegliche Führung eines Behälters (21) vorgesehen ist.

9. Fluginsekten-Fanggerät nach Anspruch 8, **dadurch gekennzeichnet, dass** die Führungsschiene (25) eine Durchbrechung (26) aufweist, durch welche das Licht der UV-Lichtquelle (5) treten kann.

10. Fluginsekten-Fanggerät nach Anspruch 8, **dadurch gekennzeichnet, dass** die Führungsschiene (25) Führungskanäle (27, 28) aufweist, die mit Einkerbungen versehen sind, in welche Teile (65) des Behälters (21) eingreifen.

11. Fluginsekten-Fanggerät nach Anspruch 8, **dadurch gekennzeichnet, dass** die Führungsschiene (25) eine Schelle (37) aufweist, die einen Sockel (7) der UV-Lichtquelle (5) umgibt.

12. Fluginsekten-Fanggerät nach Anspruch 5, **dadurch gekennzeichnet, dass** der Behälter auf seinem Umfang eine Aussparung (22, 23, 24) aufweist, welche die UV-Lichtquelle (5, 6) umgibt.

13. Fluginsekten-Fanggerät nach Anspruch 8, **dadurch gekennzeichnet, dass** die Führungsschiene (25) mit horizontal verlaufenden Schlitzen (47 bis 49) versehen ist, durch welche das UV-Licht der Lampe (5) treten kann.

14. Fluginsekten-Fanggerät nach Anspruch 10, **dadurch gekennzeichnet, dass** der Behälter einen ersten Teil (65) aufweist, der ein umgebogenes Ende besitzt, welches in eine Lücke einer zahnstangenähnlichen Kante der Führungsschiene (25) eingreift, und dass der Behälter einen zweiten Teil (67) aufweist, der sich unterhalb des ersten Teils (65) gegen die zahnstangenähnliche Kante der Führungsschiene (25) abstützt.

15. Fluginsekten-Fanggerät nach Anspruch 1, **dadurch gekennzeichnet, dass** der Behälter (8, 21) eine Schale mit ebenem Boden und hierauf senkrecht stehenden Begrenzungswänden hat.

16. Fluginsekten-Fanggerät nach Anspruch 1, **dadurch gekennzeichnet, dass** in dem Behälter ein saugfähiger Körper, beispielsweise ein Tuch oder ein Schwamm vorgesehen ist, der die Substanz aufnimmt und allmählich wieder abgibt.

17. Fluginsekten-Fanggerät nach Anspruch 1, **dadurch gekennzeichnet, dass** die Substanz CO₂ ist.

18. Fluginsekten-Fanggerät nach Anspruch 1, **dadurch gekennzeichnet, dass** die Substanz Milchsäure ist.

19. Fluginsekten-Fanggerät nach Anspruch 18, **dadurch gekennzeichnet, dass** die Milchsäure rechtsdrehende L-(+)Milchsäure ist.

20. Fluginsekten-Fanggerät nach Anspruch 1, **dadurch gekennzeichnet, dass** die Substanz ein substituiertes Benzol-Derivat ist.

21. Fluginsekten-Fanggerät nach Anspruch 1, **dadurch gekennzeichnet, dass** die Substanz Vitamin B ist.

22. Fluginsekten-Fanggerät nach Anspruch 1, **dadurch gekennzeichnet, dass** die Substanz Cholesterin ist.

## Claims

1. A flying-insect trap with a UV light source for attracting flies and with a surface that is provided with a glutinous substance and serves for trapping the flies attracted by the UV light source, **characterized in that** a receptacle (8, 21) is provided for accommodating a substance that attracts mosquitoes, wherein the surface (4) provided with the glutinous substance also serves for trapping the mosquitoes attracted by this substance.

2. The flying-insect trap according to Claim 1, **characterized in that** the receptacle (8, 21) is arranged between the UV light source and the surface (4) provided with a glutinous substance.

3. The flying-insect trap according to Claim 2, **characterized in that** the receptacle (8, 21) can be displaced relative to the UV light source (5; 38-40) and to the surface (4).

4. The flying-insect trap according to Claim 1, **characterized in that** the UV light source (5; 38-40) is connected to a base (2), on which a U-shaped stand (3) is situated, wherein said stand serves for holding a foil (4) that is provided with a glutinous substance.

5. The flying-insect trap according to Claim 1, **characterized in that** the receptacle (8) contains a bottom with at least one peripheral wall (11, 9, 10) that surrounds this bottom.

6. The flying-insect trap according to Claim 5, **characterized in that** the bottom of the receptacle (8) contains an opening, through which a base (7) for the UV light source (5) can be inserted.

7. The flying-insect trap according to Claim 5, **characterized in that** the opening is provided with an inner peripheral wall (10) and the edge of the receptacle (8) contains an outer peripheral wall (9).

8. The flying-insect trap according to Claim 1, **characterized in that** a guide rail (25) is provided for movably guiding a receptacle (21).

9. The flying-insect trap according to Claim 8, **characterized in that** the guide rail (25) contains an opening (26) for transmitting the light of the UV light source (5).

10. The flying-insect trap according to Claim 8, **characterized in that** the guide rail (25) contains guide channels (27, 28) that are provided with notches, into which parts (65) of the receptacle (21) engage.

11. The flying-insect trap according to Claim 8, **characterized in that** the guide rail (25) contains a clamp fitting (37) that surrounds the base (7) of the UV light source (5).

12. The flying-insect trap according to Claim 5, **characterized in that** the receptacle contains a peripheral recess (22, 23, 24) that surrounds the UV light source (5, 6).

13. The flying-insect trap according to Claim 8, **characterized in that** the guide rail (25) is provided with horizontally extending slots (47-49) for transmitting the UV light of the lamp (5).

14. The flying-insect trap according to Claim 10, **characterized in that** the receptacle comprises a first part (65) with a bent end that engages into a gap of a rack-like edge of the guide rail (25), and **in that** the receptacle comprises a second part (67) that is braced against the rack-like edge of the guide rail (25) underneath the first part (65).

15. The flying-insect trap according to Claim 1, **characterized in that** the receptacle (8, 21) contains a bowl with a plane bottom and peripheral walls vertically standing thereon.

16. The flying-insect trap according to Claim 1, **characterized in that** an absorbent element, for example a cloth or a sponge, is provided in the receptacle, wherein said element absorbs and gradually releases the substance.

17. The flying-insect trap according to Claim 1, **characterized in that** the substance consists of CO₂.

18. The flying-insect trap according to Claim 1, **characterized in that** the substance consists of lactic acid.

19. The flying-insect trap according to Claim 18, **characterized in that** the lactic acid consists of dextrorotatory L-(+) lactic acid.

20. The flying-insect trap according to Claim 1, **characterized in that** the substance consists of a substituted benzene derivative.

21. The flying-insect trap according to Claim 1, **characterized in that** the substance consists of vitamin B.

22. The flying-insect trap according to Claim 1, **characterized in that** the substance consists of cholesterol.

## Revendications

1. Piège à insectes volants avec une source lumineuse à UV pour attirer les insectes volants et avec une surface munie d'une substance collante pour piéger les insectes volants attirés par la source lumineuse à UV **caractérisé en ce qu'**un conteneur (8, 21) est destiné à recevoir une substance, qui attire les moustiques, ladite surface (4) munie d'une substance collante servant également à piéger les moustiques attirés par cette substance.

2. Piège à insectes volants selon la revendication 1, **caractérisé en ce que** le conteneur (8, 21) est disposé entre la source lumineuse à UV et la surface (4) munie d'une substance collante.

3. Piège à insectes volants selon la revendication 2, **caractérisé en ce que** le conteneur (8, 21) est déplaçable par rapport à la source lumineuse à UV (5; 38 à 40) et à la surface (4).

4. Piège à insectes volants selon la revendication 1, **caractérisé en ce que** la source lumineuse à UV (5; 38 à 40) est reliée à un socle (2) sur lequel se trouve un châssis en forme de U (3) pour la fixation d'une feuille (4), munie d'une substance collante.

5. Piège à insectes volants selon la revendication 1, **caractérisé en ce que** le conteneur (8) présente un fond avec au moins une paroi de limitation (11, 9, 10) entourant ce fond.

6. Piège à insectes volants selon la revendication 5, **caractérisé en ce que** le conteneur (8) présente dans son fond une percée à travers laquelle il est possible d'enficher un socle (7) pour la source lumineuse à UV (5).

7. Piège à insectes volants selon la revendication 5, **caractérisé en ce que** la percée est munie d'une paroi de limitation intérieure (10) et **en ce que** le bord du conteneur (8) présente une paroi de limitation extérieure (9).

8. Piège à insectes volants selon la revendication 1, **caractérisé en ce qu'**une glissière (25) est prévue pour le guidage mobile d'un conteneur (21).

9. Piège à insectes volants selon la revendication 8, **caractérisé en ce que** la glissière (25) présente une percée (26) à travers laquelle la lumière de la source lumineuse à UV (5) peut pénétrer.

10. Piège à insectes volants selon la revendication 8, **caractérisé en ce que** la glissière (25) présente des conduits de guidage (27, 28), munis des rainures dans lesquelles s'encastrent les parties (65) du conteneur (21).

11. Piège à insectes volants selon la revendication 8, **caractérisé en ce que** la glissière (25) présente un collier (37) qui entoure un socle (7) de la source lumineuse à UV (5).

12. Piège à insectes volants selon la revendication 5, **caractérisé en ce que** le conteneur présente sur sa périphérie un évidement (22, 23, 24) qui entoure la source lumineuse à UV (5, 6).

13. Piège à insectes volants selon la revendication 8,
**caractérisé en ce que** la glissière (25) est munie de fentes passant dans le sens horizontal (47 à 49) à travers lesquelles la lumière des UV de la source lumineuse (5) peut pénétrer.

14. Piège à insectes volants selon la revendication 10, **caractérisé en ce que** le conteneur présente une première partie (65), possédant une extrémité recourbée qui s'encastre dans un vide d'une bordure analogue à une crémaillère de la glissière (25) et **en ce que** le conteneur présente une deuxième partie (67) qui s'appuie sous la première partie (65) contre la bordure analogue à crémaillère de la glissière (25).

15. Piège à insectes volants selon la revendication 1, **caractérisé en ce que** le conteneur (8, 21) possède une coquille avec un fond uniforme et au dessus des parois de limitation horizontales.

16. Piège à insectes volants selon la revendication 1, **caractérisé en ce que** dans le conteneur est prévu un corps absorbant, par exemple un tissu ou une éponge, qui capte la substance et la restitue peu à peu.

17. Piège à insectes volants selon la revendication 1, **caractérisé en ce que** la substance est du CO₂.

18. Piège à insectes volants selon la revendication 1, **caractérisé en ce que** la substance est de l'acide lactique.

19. Piège à insectes volants selon la revendication 18, **caractérisé en ce que** l'acide lactique est un acide lactique L-(+) dextrogyre.

20. Piège à insectes volants selon la revendication 1, **caractérisé en ce que** la substance est un dérivé de benzol de substitution.

21. Piège à insectes volants selon la revendication 1, **caractérisé en ce que** la substance est de la vitamine B.

22. Piège à insectes volants selon la revendication 1, **caractérisé en ce que** la substance est du cholestérol.
